# EUROPEAN PATENT SPECIFICATION

(11) **EP 1 951 099 B1**
(45) Date of publication and mention of the grant of the patent: **28.12.2011**
(21) Application number: 06821479.0
(22) Date of filing: 17.11.2006
(51) Int. Cl.: A47L 15/42, D06F 39/00

(54) **A WASHER**
WASCHVORRICHTUNG
MACHINE À LAVER

(30) Priority: 22.11.2005 TR 200504634
(43) Date of publication of application: 06.08.2008
(73) Proprietor: Arçelik Anonim Sirketi, 34950 Istanbul (TR)
(72) Inventor: OZYURT, Bekir, 34950 Istanbul (TR); DORA, Murat, C., 34363 Istanbul (TR); GULDALI, Yalcin, 34950 Istanbul (TR)
(86) International application number: PCT/IB2006/054310
(87) International publication number: WO 2007/060582

(56) References cited:
- EP-A- 0 914 800
- EP-A1- 0 326 502
- DE-A1- 3 311 098
- DE-A1- 3 905 222

## Description

The present invention relates to a washer wherein the energy consumption is reduced.

In washers, particularly in laundry and dish washers, the washing water has to be heated at different phases in accordance with the running program. Electric heaters which require high power are usually utilized for heating the water. For example in a laundry machine, the energy required for heating makes up in average 75 % of the total energy consumed for the complete washing process. Therefore in recent years the research carried out for reducing the energy consumption of washers is particularly directed towards reducing the energy consumed by the heaters.

In state-of-the-art documents no. EP914800, GB2402204, DE2730489, GB759022 and US4531572 explanation is given for embodiments regarding the heating of the cold fresh water taken in by making use of the heat in the hot waste water that is discharged.

In the British patent application no. GB2139083, a dishwasher is described wherein cold fresh water taken in a water reserve container adjacent to the washing tank and the cold water heated by the heat conduction from the washing tank is utilized in the next stage.

In the German patent application no. DE19758064, the description is given for heating the cold water by circulating round the wash chamber during a hot water washing stage and is used in the chamber in the next stage.

In the United States patent application no. US4245488, how the cold water taken into the machine is heated by motor power control circuit losses in the form of heat is explained.

In the international patent application no. W003059142, explanation is given about the water taken into the dishwasher being circulated in a conduit that passes through the tub and over the heater, while the heater is on.

In the implementations cited above, the heat used for preheating of the fresh water taken in is only released after the machine operates for a while. Therefore at the beginning of the washing program, when the machine is not yet operated, heating of the fresh water first taken in is not possible.

In the German patent application no. DE3905222, the explanation is given for a method and devices for heating the fresh water with a temperature less than ambient temperature to the ambient temperature without consuming energy. The fresh water to be used in the washing is taken into a tank outside the machine long before the washing program and is kept there to reach the ambient temperature until the washing program starts.

The object of the present invention is the realization of a washer that provides the temperature of the washing water to be raised to the ambient temperature in a short period of time.

The washer realized in order to fulfill the object of the present invention is explicated in the attached claims. In the said washer, the water taken from the mains and having a temperature less than the ambient temperature is circulated by a pump inside a heat exchanger that is in contact with the ambient air to rapidly raise its temperature to the ambient temperature. The heater is turned on after this stage, heating the water to the temperature required by the program. Since the heater is not turned on during circulation of water within the heat exchanger, no other energy other than that of the pump is consumed. Since the pump consumes much less energy than the heater, a rather low amount of energy is consumed for raising the temperature of the water from that of the mains to the ambient temperature.

In another embodiment of the present invention, in order to further reduce the amount of time required to raise the temperature of water from that of the mains to the ambient temperature, the heat exchanger comprises fins that increase the heat exchange rate between water and the environment.

In yet another embodiment, the heat exchanger is placed behind a window that opens to the outside of the machine body to increase the heat exchange between itself and the environment. The window is preferably closed with a grill that prohibits access of the user into the machine but allows flow of the air.

In another embodiment of the present invention, in order to further increase the rate of the heat exchange, a fan is provided that enables the ambient air to pass over the heat exchanger. Accordingly, the heat exchange from the environment to water is maintained by forced circulation.

The pump may be a dedicated pump that is utilized for only this process or a circulation or discharge pump already existing in the machine.

The washer realized in order to fulfill the object of the present invention is illustrated in the attached figures, where:

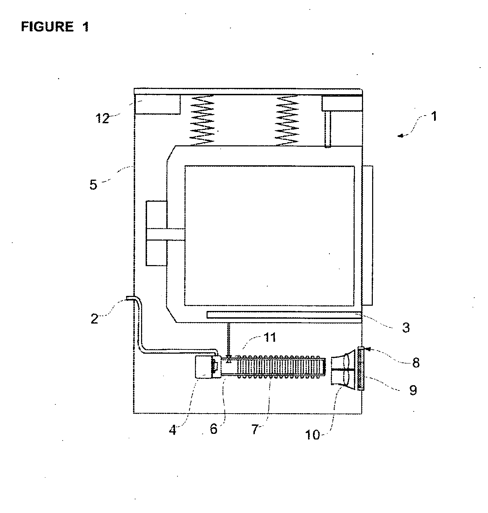

Figure 1 - is the schematic side view of a washer.

The elements shown in the figures are numbered as follows:

1. Washer

2. Water inlet -

3. Heater

4. Pump

5. Body

6. Heat exchanger

7. Fin

8. Window

9. Grill

10. Fan

11. Valve

12. Control unit

The washer (1) of the present invention is utilized for washing items such as laundry, dishes etc. with water. The washer (1) comprises a body (5), a tub situated inside the body (4), into which items to be washed are emplaced, a water inlet (2) for taking in cold water from the mains, a pump (4) providing the circulation of water, a heat exchanger (6), in contact with ambient air, inside which mains water is circulated, with both ends connected to the pump (4), a valve (11) that provides delivery of water exiting the pump (4) to the tub or the heat exchanger (6), and a control unit (12) that carries out various functions.

The control unit (12), at the start of a washing step requiring the use of water at a certain temperature (Tp), opens the valve (11), operates the pump (4) and provides the water at a lower temperature (Ts) taken in from the water inlet (2) to be circulated in the heat exchanger (6). The water activated by the pump (4) tours more than once inside the heat exchanger (6). Accordingly, the temperature of the water is raised up to almost the ambient temperature (Ta).

The washer (1) comprises a heater (3) that provides heating of the water to the temperature required for the program selected by the user. The heater (3) that is not operated while the water is being circulated in the heat exchanger (6), if necessary, is turned on after this stage to heat the water up to the temperature (Tp) required by the washing program.

Both ends of the heat exchanger (6) are connected to the pump (4). In the present invention, preferably a bisolenoid valve is utilized. Accordingly, the pump (4) can direct the water to the tub or to the heat exchanger (6). At the start of the washing program, the water taken in from the water inlet (2) is at the temperature (Ts) of the mains. The temperature (Ts) of the mains is between 8-15□C, although it may change depending on the climate and season wherein the machine (1) is used. The ambient temperature (Ta) is generally about 18-23□C. The water from the mains is passed through the valve (11) and circulated in the heat exchanger (6) for a while to provide its temperature to reach that of the ambient temperature. Consequently, the heater (3) that is turned on later can be operated for a lesser period of time since it heats the water starting from the ambient temperature (Ta) and not from the mains temperature (Ts) for reaching the temperature (Tp) required for the program. Furthermore, in some geographic regions wherein a hot climate is effective, since ambient temperature (Ta) is about 30-40□C, in some programs employing a wash with low temperatures, circulating the water in the heat exchanger (6) is sufficient, and turning on the heater (3) is not required at all. The heating process of the water to the ambient temperature (Ta) by circulating within the heat exchanger (6) can be carried out just at the start of the program or before every step requiring the use of hot water. Accordingly consumption of energy is reduced considerably. The time period of circulating water in the heat exchanger (6) is either a fixed period predetermined by the producer or a variable period controlled by sensors (not shown in the figures) that measure the water temperature.

In another embodiment of the present invention, the washer (1) comprises fins (7) on the heat exchanger (6) that increase the exchange of heat between the water and the environment. Accordingly, the time needed to heat up the water to the ambient temperature (Ta) can be reduced further.

In another embodiment of the present invention, the washer (1) comprises a window (8) on the body (5) behind which the heat exchanger (6) is situated and a grill (9) mounted on the window (8) prohibiting the access of the user into the body (5) but allowing flow of the ambient air therethrough. By this means, the water circulated in the heat exchanger (6) is subjected to a more efficient heat exchange with the environment.

In yet another embodiment of the present invention, the washer (1) comprises a fan (10) inside the body (5), between the grill (9) and the heat exchanger (6) that forces the ambient air to pass over the heat exchanger (6). The fan (10) provides the heat exchange between the water and the environment to take place by forced circulation and further increases the rate of heat exchange. The fan (10) can be operated together with the pump (4) or alternately.

The washer (1) of the present invention is a dishwasher or a clothes washing machine.

The water to be used in the washer (1) of the present invention is first circulated in the heat exchanger (6) to be heated to the ambient temperature. While the water is circulated, the ambient heat is transferred to the water much more rapidly by means of the fan (10) and the fins (7). The pump (4) and the fan (10) are both devices that have a power consumption of around 50 Watts. The heater (3) consumes about 1900-2000 Watts of electricity. In the present invention, even if the pump (4) and the fan (10) are operated together, for example for 10 minutes, they consume about 50-75 % less energy than a heater (3) that is operated for 1 minute. In the washer (1) of the present invention, since circulating water instead of keeping it stationary is proposed, it is possible to raise the temperature of the water taken from the mains to the ambient temperature in a rather short period of time. Consequently the duration of the washing program is not extended too much.

The washer (1) of the present invention consumes less energy since the heater (3) is operated less. Furthermore, since water is taken in at the beginning of the washing program and heated during circulation instead of being kept stationary, the formation of dangerous microorganisms that multiply in stagnant water is prevented. Additionally, even if the washer (1) is not operated consecutively, the water can be heated to the ambient temperature without the use of the heater (3).

## Claims

1. A washer (1) that is utilized for washing items such as laundry, dishes with water, comprising a body (5), a tub situated inside the body, into which items to be washed are emplaced, a water inlet (2) for taking in cold water from the mains, and a pump (4) providing the circulation of water, and **characterized by** a heat exchanger (6), in contact with the ambient air, inside which water is circulated, with both ends connected to the pump (4), a valve (11) that provides delivery of water exiting the pump (4) to the tub or the heat exchanger (6) and a control unit (12) adapted to open the valve (11) and to operate the pump (4) at the beginning of a washing step requiring the use of water at a certain temperature (Tp) providing circulation of the low temperature (Ts) water taken from the water inlet (2) until it almost reaches the ambient temperature (Ta).

2. A washer (1) according to Claim 1, **characterized by** a control unit (12) that circulates the water inside the heat exchanger (6) for a fixed period of time predetermined by the producer.

3. A washer (1) according to Claim 1, **characterized by** a at least one sensor that measures the temperature of the water and a control unit (12) that is adapted to circulate the water inside the heat exchanger (6) until the temperature value measured by the sensor reaches the ambient temperature (Ta).

4. A washer (1) according to any one of the above claims, **characterized by** fins (7) situated on the heat exchanger (6) so as to increase the heat exchange between the water and the environment.

5. A washer (1) according to any one of the above claims, **characterized by** a window (8) that is formed on the body (5), behind which the heat exchanger (6) is situated and a grill (9) mounted on the window (8) prohibiting the access of the user into the body (5) but allowing the flow of ambient air.

6. A washer (1) according to Claim 5, **characterized by** a fan (10) situated inside the body (5), between the grill (9) and the heat exchanger (6) that forces the ambient air to pass over the heat exchanger (6).

7. A washer (1) according to any one of the above claims, which is a dishwasher.

8. A washer (1) according to any one of claims 1 to 6, which is a laundry washing machine.

## Patentansprüche

1. Wasch- und Spülmaschine (1), die zum Waschen und Spülen von Wäsche, Geschirr mit Wasser benutzt wird, umfassend einen Gehäusekörper (5), einen Laugenbehälter, der im Inneren des Gehäusekörpers (5) angeordnet ist, und in den zu waschende bzw. zu spülende Gegenstände gegeben werden, einen Wassereinlass (2) zum Aufnehmen von Kaltwasser vom Wasserversorgungsnetz, und eine Pumpe (4), die für die Zirkulation von Wasser sorgt, und **gekennzeichnet durch** einen Wärmetauscher (6), der mit der Umgebungsluft in Kontakt steht, und in dem Wasser zirkuliert, und dessen beide Enden mit der Pumpe (4) verbunden sind, ein Ventil (11), das dafür sorgt, dass das Wasser, das die Pumpe (4) verlässt, an den Laugenbehälter oder den Wärmetauscher (6) geleitet wird, und eine Steuereinheit (12), die dazu ausgebildet ist, das Ventil (11) zu öffnen und die Pumpe (4) zu Beginn eines Wasch- bzw. Spülschrittes zu betreiben, der die Benutzung von Wasser einer bestimmten Temperatur (Tp) erfordert, um für das Zirkulieren des Wassers niedriger Temperatur (Ts) zu sorgen, das am Wassereinlass (2) entnommen wird, bis es nahezu die Umgebungstemperatur (Ta) erreicht hat.

2. Wasch-/Spülmaschine (1) nach Anspruch 1, **gekennzeichnet durch** eine Steuereinheit (12), die das Wasser für einen festgelegten Zeitraum, der vom Hersteller im Voraus bestimmt wird, im Wärmetauscher (6) zirkuliert.

3. Wasch-/Spülmaschine (1) nach Anspruch 1, **gekennzeichnet durch** mindestens einen Sensor, der die Temperatur des Wassers misst, und eine Steuereinheit (12), die dazu ausgebildet ist, das Wasser im Wärmetauscher (6) zu zirkulieren, bis der vom Sensor gemessene Temperaturwert die Umgebungstemperatur (Ta) erreicht.

4. Wasch-/Spülmaschine (1) nach einem der vorangehenden Ansprüche, **gekennzeichnet durch** Lamellen (7), die am Wärmetauscher (6) angeordnet sind, um den Wärmetausch zwischen dem Wasser und der Umgebung zu erhöhen.

5. Wasch-/Spülmaschine (1) nach einem der vorangehenden Ansprüche, **gekennzeichnet durch** ein Fenster (8), das am Gehäusekörper (5) ausgebildet ist und hinter dem der Wärmetauscher (6) angeordnet ist, und ein Gitter (9), das am Fenster (8) angebracht ist und das einen Zugriff des Benutzers auf das Innere des Gehäusekörpers (5) verhindert, aber das Strömen von Umgebungsluft zulässt.

6. Wasch-/Spülmaschine (1) nach Anspruch 5, **gekennzeichnet durch** ein Gebläse (10), das im Inneren des Gehäusekörpers (5) zwischen dem Gitter (9) und dem Wärmetauscher (6) angeordnet ist und die Umgebungsluft zwingt, über den Wärmetauscher (6) zu strömen.

7. Wasch-/Spülmaschine (1) nach einem der vorangehenden Ansprüche, wobei die eine Geschirrspülmaschine ist.

8. Wasch-/Spülmaschine (1) nach einem der Ansprüche 1 bis 6, wobei die eine Waschmaschine ist.

## Revendications

1. Une laveuse (1) qui est utilisée pour le lavage des objets tels que le linge, la vaisselle avec de l'eau, comprenant un corps (5), une cuve située dans le corps (5), dans laquelle les objets à laver sont placés, une entrée d'eau (2) pour la prise de l'eau froide du réseau, et une pompe (4) permettant la circulation de l'eau, et **caractérisée par** un échangeur de chaleur (6) qui est en contact avec l'air ambiant, dans lequel l'eau est circulée, dont les deux extrémités sont reliées à la pompe (4), une vanne (11) qui permet la livraison de l'eau sortant de la pompe (4) à la cuve ou l'échangeur de chaleur (6) et une unité de contrôle (12) adaptée pour ouvrir la vanne (11) et pour opérer la pompe (4) au début d'une étape de lavage nécessitant l'utilisation de l'eau à une certaine température (Tp), permettant la circulation de l'eau à la basse température (Ts) prise par l'entrée d'eau (2) jusqu'à ce qu'elle atteigne presque la température ambiante (Ta).

2. Une laveuse (1) selon la Revendication 1, **caractérisée par** une unité de contrôle (12) qui fait circuler l'eau à l'intérieur de l'échangeur de chaleur (6) pour une période de temps fixe prédéterminée par le producteur.

3. Une laveuse (1) selon la Revendication 1, **caractérisée par** au moins un capteur qui mesure la température de l'eau et une unité de contrôle (12) qui est adaptée pour faire circuler l'eau dans l'échangeur de chaleur (6) jusqu'à ce que la valeur de température mesurée par le capteur atteint la température ambiante (Ta).

4. Une laveuse (1) selon l'une quelconque des revendications précédentes, **caractérisée par** des ailettes (7) situées sur l'échangeur de chaleur (6) afin d'augmenter le transfert thermique entre l'eau et l'environnement.

5. Une laveuse (1) selon l'une quelconque des revendications précédentes, **caractérisée par** une fenêtre (8) qui est formée sur le corps (5), derrière laquelle l'échangeur de chaleur (6) est situé et une grille (9) montée sur la fenêtre (8) interdisant à l'utilisateur d'accéder dans le corps (5) mais permettant la circulation de l'air ambiant.

6. Une laveuse (1) selon la Revendication 5, **caractérisée par** un ventilateur (10) situé à l'intérieur du corps (5), entre la grille (9) et l'échangeur de chaleur (6), qui force l'air ambiant à passer sur l'échangeur de chaleur (6).

7. Une laveuse (1) selon l'une quelconque des revendications précédentes, qui est un lave-vaisselle.

8. Une laveuse (1) selon l'une quelconque des revendications de 1 à 6, qui est un lave-linge.
